# EUROPEAN PATENT APPLICATION

(11) **EP 4 049 834 A1**
(43) Date of publication of application: **31.08.2022**
(21) Application number: 21305225.1
(22) Date of filing: 25.02.2021
(51) Int. Cl.: B29C 65/02, H02G 1/14, H02G 15/08, B29C 65/00, H02G 15/113, H02G 15/18, B29L 31/34

(54) **THERMOPLASTIC INSULATION SYSTEM**

(71) Applicant: Nexans, 92400 Courbevoie (FR)
(72) Inventor: JARVID, Markus, 44242 Kungälv (SE); MAURI, Massimiliano, 1739 Borgenhaugen (NO)
(74) Representative: Ipsilon

(57) **Abstract**

The present invention relates to a thermoplastic insulation system for jointing of high voltage conductors, comprising at least one joint element, wherein each joint element comprises an insulating layer made of a thermoplastic insulating material, and wherein the at least one joint element is adapted for surrounding the electric conductor joint and wherein the pre-moulded thermoplastic insulation constitutes a cylindrical layer around the electric conductor joint. The invention also relates to a method to produce such an insulation system.

## Description

### Technical field

The present invention relates to high voltage electric cable connections. More particularly, the invention relates to a thermoplastic insulation system for jointing of high voltage conductors and to a method for jointing of high voltage conductors.

### Background

JPH0847154 describes pre-moulded insulator sleeve into which a conductor having a semi-conductive layer is inserted. After insertion, the insulator sleeve is heated to cure and integrate with the conductor and the semi-conductive layer.

GB1381770 describes a junction sleeve for a cable, the sleeve being of the type consisting of an elongate member formed of a flexible material such as plastics and formed as a cylinder terminating at either end in a frustoconical end section with a central opening for receiving a cable and provided with a longitudinal slit extending from end to end.

EP0724789 relates to the protection of a connection between two pieces of high voltage electrical equipment, especially between a power cable and other electrical equipment.

EP2639264 describes a field grading material including a polymeric matrix and an electrically conducting organic filler, as well as to field grading element, including said field grading material.

EP3365952 relates to a joint for medium/high voltage electric cables having a thermoplastic insulation system, and to a method for manufacturing the same.

Several solutions for insulation system for jointing of high voltage conductors are known, but all have various disadvantages that should be overcome. One such problem is that the traditional lapping method may not be viable anymore since the lack of cross-linking will allow material deformation during the melting procedure. An alternative is to use a direct injection moulding procedure. However, this procedure requires highly specialized equipment and the jointing needs to be performed in two steps in order to account for density/volume change in the material.

The goal of the present invention is to provide a new and advantageous insulation system for jointing of high voltage conductors. In particular, the present invention provides thermoplastic insulation system for jointing of high voltage conductors.

### Summary of the invention

The present invention is defined by the appended claims and in the following.

In a first aspect, the present invention provides a method for manufacturing an electric cable joint, the method comprising the steps of:
a) providing a first and a second electric cables, each cable comprising an electric conductor and a thermoplastic insulation system, surrounding the electric conductor, the thermoplastic insulation system comprising an inner thermoplastic semiconducting layer, a thermoplastic insulating layer and an outer thermoplastic semiconducting layer;
b) joining the respective terminal portions of the electric conductors of the first electric cable and of a second electric cable placed axially adjacent to the first electric cable, to form an electric conductor joint;
c) surrounding the electric conductor joint with a joint inner layer made of a first thermoplastic semiconducting material;
d) surrounding the joint inner layer made of a first thermoplastic semiconducting material with a joint insulating layer made of a thermoplastic insulating material; the thermoplastic insulating material is supplied in the form of at least one pre-moulded element, the at least one pre-moulded element forming a cylindrical layer when assembled; and
e) surrounding the joint insulating layer made of thermoplastic insulating material with a joint outer layer made of a second thermoplastic semiconducting material.

In other words, the terminal portion of the first electric conductor is placed axially adjacent to the terminal portion of the second electric conductor when the electric conductors are joined.

Thermoplastic are defined as polymers that can be melted and recast almost indefinitely. They are molten when heated and harden upon cooling. The polymer network of a thermoplastic material forms and/or breaks up as the temperature is changed.

In an embodiment of the method, any of the inner thermoplastic semiconducting material and the outer thermoplastic semiconducting material may be provided in the form of a at least one pre-moulded element.

In another embodiment of the method, each of the inner thermoplastic semiconducting material, the thermoplastic insulating material and the outer thermoplastic semiconducting material may be provided separately in the form of at least one pre-moulded element.

In an embodiment of the method, either the inner thermoplastic semiconducting material or outer thermoplastic semiconducting material may be provided in the form of a at least one pre-moulded element together with the thermoplastic insulating material. In other words, such that steps c) and d) or steps d) and e) may be performed at the same time.

In another embodiment of the method, the inner thermoplastic semiconducting material, the thermoplastic insulating material and an outer thermoplastic semiconducting material may be provided in the form of the least one pre-moulded element. In other words, such that steps c), d) and e) may be performed at the same time.

In another embodiment of the method, the materials are heated above their crystalline melting point and pressure is applied to shape each layer into a cylinder after any of the steps c), d), and e).

In another embodiment of the method, the materials are heated above their crystalline melting point and pressure is applied to shape the joint into a cylinder only after step e).

In a second aspect, the present invention provides a pre-moulded thermoplastic insulation for an electrical conductor joint. The pre-moulded thermoplastic insulation comprises at least one joint element, wherein each joint element comprises an insulating layer made of a thermoplastic insulating material, and wherein the at least one joint element is adapted for surrounding the electric conductor joint and
wherein the pre-moulded thermoplastic insulation constitutes a cylindrical layer around the electric conductor joint.
The person skilled in the art will understand that a cylindrical layer refers to a hollow cylindrical layer or a tube-shaped cylindrical layer.

In an embodiment of the pre-moulded thermoplastic insulation, the pre-moulded thermoplastic insulation may further comprise an inner layer made of a first thermoplastic semiconducting material, covering an internal surface of the insulating layer, and adapted for abutting the electric conductor joint.

In another embodiment of the pre-moulded thermoplastic insulation, the pre-moulded thermoplastic insulation may further comprise an outer layer made of a second thermoplastic semiconducting material surrounding the insulating layer of the pre-moulded element.

In another embodiment of the pre-moulded thermoplastic insulation, the at least one or more joint elements are connectable through heat treatment.

In an embodiment of the pre-moulded thermoplastic insulation, the insulation is a tubular cylinder and each joint element is a sector of the tubular cylinder, wherein n elements form a full cylinder; and n is an integer between 2 and 10, preferably between 2 and 5.
The person skilled in the art will understand that a sector of the tubular cylinder refers to a hollow cylindrical sector or a tube sector.

In an embodiment of the pre-moulded thermoplastic insulation according to the invention, the pre-moulded insulation comprises two joint elements.

In another embodiment of the pre-moulded thermoplastic insulation according to the invention, the pre-moulded thermoplastic insulation may be in the form of a tubular cylinder with at least one slit.

In a third aspect, the invention provides an electric cable joint, comprising a pre-moulded thermoplastic insulation according to the second aspect of the invention.

### Short description of the drawings

The present invention is described in detail by reference to the following drawings:
Fig. 1a-1d is a cross-sectional view of the assembly of insulation elements around a conductor.
Fig. 2 is a side view of an embodiment of the jointing procedure.
Fig. 3 is a side view of a series of embodiments of the at least one pre-moulded element.
Fig. 4 is a side view of another series of embodiments of the at least one pre-moulded element around an electric conductor.

### Detailed description of the invention

Jointing cables with a thermoplastic insulation system is challenging. The specific properties of thermoplastic polymers make it difficult if not impossible to adapt procedures known in the art, for example traditionally used with crosslinked polymer, where once set each layer will not be affected by the heating of the subsequent layer.

The challenge is that after an additional thermoplastic layer is applied to build a joint, the additional thermoplastic layer needs to be heated to form a cylinder and insure the best contact with the previous layer. However, this additional thermoplastic layer (and potentially the layer underneath too, if it is also made of thermoplastic material) may lose its shape during this step. This will in turn cause deformation and uniformity/homogeneity problems at the joint. These are critical parameters to insure a good insulation in the joint.

By already having at least the insulation layer of the insulating system in its final form the problem of material flow may be solved. Equal pressure may be applied on the outer surface of the layer of interest during heating so that the material is held in place.

This is not as easy when dealing with a tape-lapped layer because the volume change is different in the joint compared to the surrounding cable due to the voids introduced between laps. The inventive method reduces drastically these voids, and virtually eliminates them.

Compared to the traditional tape-lapping procedure, the amount of material interfaces is significantly reduced and thus reduces the risk for contamination, since cleanliness will usual be a key factor for success.

This method also presents the advantage of being a much less labour-intensive method.

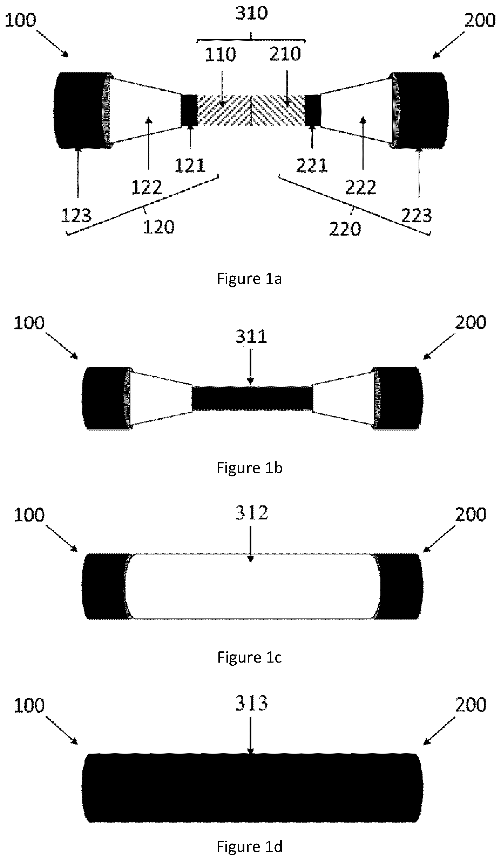

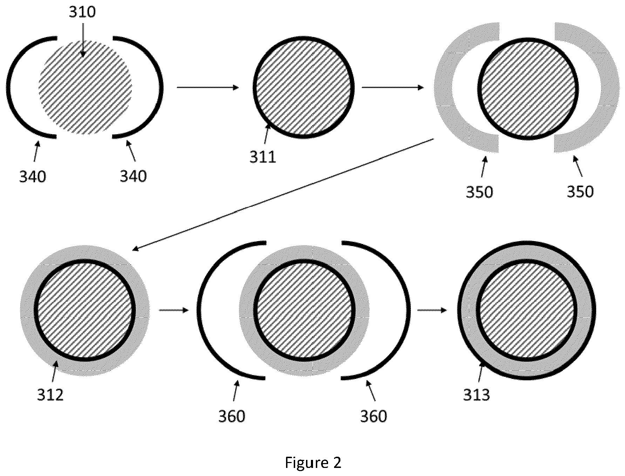

The present invention provides an improved method for manufacturing an electric cable joint 300, the method illustrated in figure 1 (and figure 2) comprising the steps of:
- providing a first and a second electric cables 100; 200, each cable comprising an electric conductor 110; 210 and a thermoplastic insulation system 120; 220, surrounding the electric conductor 110; 210, the thermoplastic insulation system 120; 220 comprising an inner thermoplastic semiconducting layer 121; 221, a thermoplastic insulating layer 122; 222 and an outer thermoplastic semiconducting layer 123; 223;
- joining the respective terminal portions of the electric conductors 110; 210 of the first electric cable and of a second electric cable placed axially adjacent to the first electric cable, to form an electric conductor joint 310;
- surrounding the electric conductor joint 310 with a joint inner layer 311 of a first thermoplastic semiconducting material;
- surrounding the joint inner layer 311 of a first thermoplastic semiconducting material with a joint insulating layer 312 of a thermoplastic insulating material; the thermoplastic insulating material is supplied in the form of at least one pre-moulded element 350, the at least one pre-moulded element 350 forming a complete layer when assembled; and
- surrounding the joint insulating layer 312 of thermoplastic insulating material with a joint outer layer 313 of a second thermoplastic semiconducting material.

After assembly of a new thermoplastic material on a previous layer, to form the definitive new layer, it is required to apply heat and pressure to said layer, so that the thermoplastic material is heated above its crystalline melting point and shaped into a cylinder. There are different approaches for when to do this step. It can be advantageous to apply heat and pressure after each addition of a new thermoplastic material, for example to ensure that the current layer is well in place before continuing the method or to avoid the formation of bubbles between the layers; but it can also be advantageous to apply heat and pressure only after certain layers are in place, for example to avoid deformation of certain layers, or of the thermoplastic cables when heating in order to form a new layer.

This heating step will also ensure the connection between the different layers of the joint 310, 311, 312, 313.

For example, after preparing the electric cables 100; 200, the respective terminal portions of the electric conductors 110; 210 are joined, forming the electric conductor joint 310, as shown in figure 1a.

In a second step, the electric conductor joint 310 is surrounded with a first thermoplastic semiconducting material, forming a joint inner layer 311, as shown figure 1b. This can be done by using techniques known in the art, for example with tape-lapping. The material is then heated above the crystalline melting point and shaped into a cylinder around the conductor. It will be important to form an even cylinder.

It may be beneficial to prepare the joint inner layer 311 in a separate step, especially when using the tape-lapping method, in order to fill out voids where the material contacts the conductor as this can reduce the risk for transplantation of defects.

Then, in a third step, illustrated in figure 1c and in figure 2, the at least one pre-moulded element 350 made of a thermoplastic insulating material, is assembled around the joint inner layer 311, forming a joint insulating layer 312. The material is heated above the crystalline melting point and shaped into a cylinder around the conductor. It will be important to form an even cylinder.

Then in a fourth step, illustrated in figure Id, the joint insulating layer 312 is surrounded with a second thermoplastic semiconducting material, using techniques known in the art, forming a joint outer layer 313. The material is heated above the crystalline melting point and shaped into a cylinder around the conductor. It will be important to form an even cylinder.

Alternatively, in another example the only heating and shaping step may be after the addition of the joint outer layer 313. This would avoid multiple heating step and thus protect the different layers of thermoplastic in the cables to be joined.

Thermoplastic are defined as polymers that can be melted and recast almost indefinitely. They are molten when heated and harden upon cooling. The polymer network of a thermoplastic material forms and/or breaks up as the temperature is changed.

For example, the insulating material could be made of thermoplastic polyolefins (TPO), polypropylene, polypropylene and its copolymers with ethylene, HDPE, LLDPE, LDPE, MDPE, PE-based copolymers etc. or any combination thereof.
For example, an insulating material could comprise PP, TPO and LLDPE.

For example, the semiconducting material could be made of thermoplastic polyolefins (TPO), polypropylene, polypropylene and its copolymers with ethylene, HDPE, LLDPE, LDPE, MDPE, PE-based copolymers etc. or any combination thereof, and of a conductive filler such as furnace black, acetylene black, etc. or any combination thereof.

In order to achieve desired material properties, both the insulating and the semiconducting materials may further comprise additives such as plasticizers, fillers (including nanomaterials), stabilizers, processing aids, etc.

In a second example illustrated in figure 2, the joint inner layer 311 and the joint outer layer 313 are also each made of 2 pre-moulded joint elements 340; 360, in the shape of halves of a tubular cylinder and made of a first and second thermoplastic semiconducting material, respectively.

The person skilled in the art will understand that even though the joint inner layer 311 and the joint outer layer 313 are described to both be made of 2 pre-moulded joint elements 340; 360; the assembly of each of these layer is an independent step and could be replaced by a suitable method in the art, including tape-lapping.

In this second example each layer 311, 312, 313 is applied on the previous layer 310, 311, 312 respectively. The material is heated above the crystalline melting point and shaped into a cylinder around the conductor after each layer addition.

In a third example, the joint inner layer 311 and the joint outer layer 313 are also each made of 2 pre-moulded joint elements 340; 360, in the shape of halves of a tubular cylinder and made of a first and second thermoplastic semiconducting material, respectively.

Just as in the second example, the person skilled in the art will understand that even though the joint inner layer 311 and the joint outer layer 313 are described to both be made of 2 pre-moulded joint elements 340; 360; the assembly of each of these layer is an independent step and could be replaced by a suitable method in the art, including tape-lapping.

In this third example each layer 311, 312, 313 is applied on the previous layer 310, 311, 312 respectively. Finally, the material is heated above the crystalline melting point and shaped into a cylinder around the conductor when all elements 310, 311, 312, 313 of the joint are assembled.

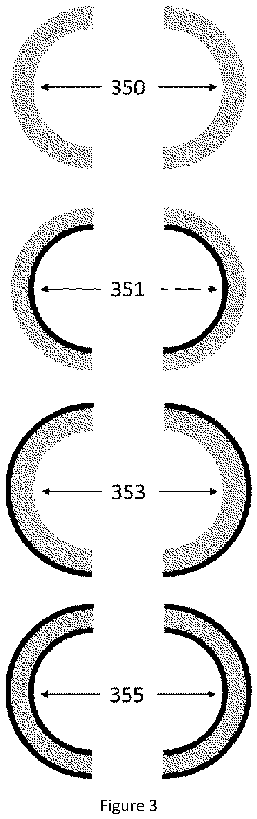

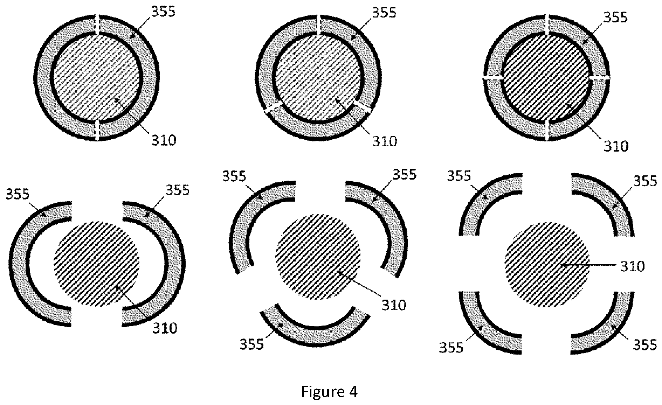

Different types of pre-moulded joint elements that are used to produce the thermoplastic joint of interest are illustrated in figures 3 and 4.

Figure 3 shows pre-moulded joint elements having different layer structures:
- A first pair of pre-moulded joint elements 350 with an insulating layer made of a thermoplastic insulating material.
- A second pair of pre-moulded joint elements 351 with an inner layer made of a first thermoplastic semiconducting material and an insulating layer made of a thermoplastic insulating material, covering an external surface of the inner semiconducting layer.
- A third pair of pre-moulded joint elements 353 with an insulating layer made of a thermoplastic insulating material and an outer layer made of a second thermoplastic semiconducting material, covering an external surface of the insulating layer.
- A fourth pair of pre-moulded joint elements 355 with an inner layer made of a first thermoplastic semiconducting material, an insulating layer made of a thermoplastic insulating material, covering an external surface of the inner semiconducting layer and an outer semiconducting layer made of a second thermoplastic semiconducting material, covering an external surface of the insulating layer.

By producing pre-moulded joint elements already having multiple layers of interest, the number of step in the jointing procedure is reduced, and the procedure will be much less labour-intensive. This also reduces the risk for contamination, as cleanliness is usually a key factor for success. Finally producing these pre-moulded joint elements will also ensure a better contact between the layers.

Figure 4 illustrates some of the geometrical shapes of the at least one joint element 350, 351, 353, 355 used to make the pre-moulded joint insulation according to the present invention.
- In a first example, the at least one joint element 355 is in the form of a tubular cylinder with two slits.
- In a second example, the at least one joint element 355 is in the form of a tubular cylinder with three slits.
- In a third example, the at least one joint element 355 is in the form of a tubular cylinder with four slits.

The person skilled in the art will understand that even though the slits are evenly distributed in figure 3 they could be placed at any relative angle on the tubular cylinder.
- In a fourth example, the at least one joint element 355 is in the form of two sectors of a tubular cylinder, here two halves of a tubular cylinder.
- In a fifth example, the at least one joint element 355 is in the form of three sectors of a tubular cylinder, here three thirds of a tubular cylinder.
- In a sixth example, the at least one joint element 355 is in the form of four sectors of a tubular cylinder, here four quarters of a tubular cylinder.

The person skilled in the art will understand that even though the sectors are all of the same size in figure 3 they could of different size, for example a sector of a half of a tubular cylinder, a sector of a third of a tubular cylinder and a sector of a sixth of a tubular cylinder.

The person skilled in the art will also understand the structures illustrated in figure 3 can freely be combined with the geometrical shapes of the at least one joint element (350, 351, 353, 355) illustrated in figure 4 to arrive to even more combinations of pre-moulded joint insulation according to the present invention.

The person skilled in the art will also understand that the structures of the at least one joint element (350, 351, 353, 355) and of the optional pre-moulded joint elements 340; 360 or of the equivalent structure obtained by a method known in the art, are made to achieve close contact, that is to say opposite sides have interlocking design.

## Claims

1. A pre-moulded thermoplastic insulation for an electrical conductor joint (310) comprising at least one joint element (350, 351, 353, 355); wherein each joint element comprises
- an insulating layer made of a thermoplastic insulating material, and wherein the at least one joint element (350, 351, 353, 355) is adapted for surrounding the electric conductor joint (310) and
wherein the pre-moulded thermoplastic insulation constitutes a cylindrical layer around the electric conductor joint (310).

2. A pre-moulded thermoplastic insulation according to claim 1, wherein each joint element (351, 355) further comprises:
- an inner layer made of a first thermoplastic semiconducting material, covering an internal surface of the insulating layer, and adapted for abutting the electric conductor joint (310).

3. A pre-moulded thermoplastic insulation according to claim 1 or 2, wherein each joint element (353, 355) further comprises:
- an outer layer made of a second thermoplastic semiconducting material, covering an external surface of the insulating layer.

4. A pre-moulded thermoplastic insulation according to any of the claims 1-3, wherein the at least one or more joint elements (350, 351, 353, 355) are connectable through heat treatment.

5. A pre-moulded thermoplastic insulation according to any of the claims 1-4, wherein the insulation is a tubular cylinder and each joint element (350, 351, 353, 355) is a sector of the tubular cylinder, wherein n elements form a full cylinder; and n is an integer between 2 and 10, preferably between 2 and 5.

6. A pre-moulded thermoplastic insulation according to any of the claims 1-5, wherein the pre-moulded insulation comprises two joint elements.

7. A pre-moulded thermoplastic insulation according to any of the claims 1-4, wherein the pre-moulded joint element (350, 351, 353, 355) is in the form of a tubular cylinder with at least one slit.

8. An electric cable joint, comprising a pre-moulded thermoplastic insulation according to anyone of the claims 1-7.

9. A method for manufacturing an electric cable joint (300), the method comprising the steps of:
a) providing a first and a second electric cables (100; 200), each cable comprising an electric conductor (110; 210) and a thermoplastic insulation system (120; 220) surrounding the electric conductor (110; 210), the thermoplastic insulation system (120; 220) comprising an inner thermoplastic semiconducting layer (121; 221), a thermoplastic insulating layer (122; 222) and an outer thermoplastic semiconducting layer (123; 223);
b) joining the respective terminal portions of the electric conductors (110; 210) of the first electric cable and of the second electric cable to form an electric conductor joint (310);
c) surrounding the electric conductor joint (310) with a joint inner layer (311) made of a first thermoplastic semiconducting material;
d) surrounding the joint inner layer (311) with a joint insulating layer (312) made of a thermoplastic insulating material; and
e) surrounding the joint insulating layer (312) with a joint outer layer (313) made of a second thermoplastic semiconducting material;
**characterized in that** the joint insulating layer (312) is provided in the form of at least one pre-moulded element (350, 351, 353, 355), the at least one pre-moulded element (350, 351, 353, 355) forming a cylindrical layer when assembled around the electric conductor joint (310).

10. A method according to claim 9, wherein any of the joint inner layer (311) and the joint outer layer (313) is provided in the form of at least one pre-moulded element (340; 360).

11. A method according to claim 9 or 10, wherein the joint inner layer (312) and the joint outer layer (313) are each provided in the form of at least one pre-moulded element (340; 360).

12. A method according to claim 9, wherein the joint insulating layer (312) and at least one of the joint inner layer (311) and the joint outer layer (313) are provided in the form of the at least one pre-moulded element (351; 353).

13. A method according to claim 9, where the joint inner layer (311), the joint insulating layer (312) and the joint outer layer (313) are provided in the form of at the at least one pre-moulded element (355).

14. A method according to any of claims 9-13, where the materials are heated above their crystalline melting point and pressure is applied to shape each layer into a cylinder after any of the steps c), d), and e).

15. A method according to any of claims 9-13, where the materials are heated above their crystalline melting point and pressure is applied to shape the joint into a cylinder only after step e).
